# EUROPÄISCHE PATENTSCHRIFT

(11) **EP 3 259 325 B1**
(45) Veröffentlichungstag und Bekanntmachung des Hinweises auf die Patenterteilung: **03.04.2019**
(21) Anmeldenummer: 16705779.3
(22) Anmeldetag: 22.02.2016
(51) Int. Cl.: C09J 7/00

(54) **VERFAHREN ZUR REDUZIERUNG DER WICKELSPIEGELKLEBRIGKEIT EINER KLEBEBANDROLLE**
METHOD FOR REDUCING THE WINDING LEVEL ADHESIVENESS OF AN ADHESIVE TAPE ROLL
PROCÉDÉ POUR RÉDUIRE LE CARACTÈRE COLLANT DE LA TRANCHE D'UN ROULEAU DE RUBAN ADHÉSIF

(30) Priorität: 20.02.2015 DE 102015203088
(43) Veröffentlichungstag der Anmeldung: 27.12.2017
(73) Patentinhaber: tesa SE, 22848 Norderstedt (DE)
(72) Erfinder: BENDEICH, Manuel, 22527 Hamburg (DE); HÄHNEL, Marcel, 25336 Klein Nordende (DE); KOOPS, Arne, 23881 Neu-Lankau (DE)
(86) Internationale Anmeldenummer: PCT/EP2016/053651
(87) Internationale Veröffentlichungsnummer: WO 2016/131984

(56) Entgegenhaltungen:
- EP-A2- 1 129 791
- WO-A1-2008/095653
- WO-A2-2013/039737

## Beschreibung

Die Erfindung betrifft ein Verfahren zur Reduzierung der Wickelspiegelklebrigkeit einer Klebebandrolle.

Bei der Herstellung von Haftklebebändern werden häufig Substratbahnen mit Klebstoffen beschichtet, wobei die Substratbahnen in Breiten von 500 mm - 200 mm vorliegen. Nach dem Beschichten werden die breiten Klebebandrollen in Klebebandrollen gewünschter Arbeitsbreite geschnitten. Durch den Schnittvorgang liegen an den Schnittkanten der Klebebandrollen die Haftklebstoffe offen. Der gesamte Wickelspiegel der Klebebandrolle kann adhäsive Eigenschaften aufweisen, die eine Weiterverarbeitung sowie den Produkteinsatz erschweren und sogar unmöglich machen.

Diese Nachteile treten insbesondere dann auf, wenn das Klebeband ein im Verhältnis zur Substratbahn dicke Haftklebstoffbeschichtung aufweist. Insbesondere bei diesen sogenannten Dickschichtprodukten werden darüber hinaus häufig viskoelastische Substratbahnen mit eigenen adhäsiven Eigenschaften eingesetzt, sodass der gesamte Wickelspiegel der Klebebandrolle nahezu in der gesamten Schnittfläche klebend ist. Die Haftklebrigkeit des Wickelspiegels führt dazu, dass nach Kontakt mit anderen Gegenständen die Klebebandrolle beim Entfernen zerstört oder deformiert wird und für eine weitere Verwendung nicht mehr einsetzbar ist. Dieser Nachteil ist bei sehr schmalen Klebebandrollen, den sogenannten Schmalrollen, besonders ausgeprägt.

Darüber hinaus ist ein offener und adhäsiver Wickelspiegel einer hohen Gefahr einer Verschmutzung ausgesetzt, insbesondere wenn Schmutz und Staub in der direkten Umgebung vorhanden sind. Für bestimmte Anwendungen scheiden die verschmutzten Klebbänder aus, insbesondere bei transparenten Verklebungen im Elektronikbereich. Es ist bekannt, silikonisierte oder trennende Papiere oder Folien auf die Seitenflächen aufzulegen. Diese trennenden Folien oder Papiere werden in geeigneter Form und Größe auf die Wickelspiegelgröße gestanzt. Dieses ist jedoch sehr aufwändig. Darüber hinaus müssen die silikonisierten Trennscheiben vor der Anwendung der Klebebandrolle wieder entfernt werden und nach dem Gebrauch wieder aufgelegt werden, sodass die Benutzung der Klebebandrolle äußerst ineffizient gestaltet ist. Bei automatisierter Verarbeitung der Rolle müssen die Trennscheiben entfernt werden und eine geeignete Halterung platziert werden, ohne dass die Rolle mit anderen Bauteilen bei der Abwicklung verklebt oder eine Verschmutzung erfolgt.

Eine weitere industriell übliche Alternative ist das Bepudern der Wickelspiegel mit einzelnen Pigmenten, wie z. B. Talkum. Jedoch liegt bei diesem Verfahren eine signifikante Verschmutzung der gesamten Klebebandrolle vor, da das Bepudern über die Verstäubung der Pigmente erfolgt. Darüber hinaus "sumpfen" die kleinen Pigmente in die Klebmasse ein, sodass die Wirkung nach Behandlung deutlich nachlässt. Darüber hinaus verändern sich die optischen Eigenschaften des Klebebandes, da das Licht an der Schnittkante diffus gebrochen wird. Das ist insbesondere für Displayverklebungen mit hohen optischen Klarsichteigenschaften nachteilig.

Aus der WO 2008 09 565 3 ist ein Verfahren zur Passivierung einer Kante von Haftklebebändern beschrieben, wobei die Passivierung durch physikalische oder chemische Vernetzung des Haftklebers auf der Kante oder durch den physikalischen oder chemischen Abbau der für die haftklebende Wirkung verantwortlichen Strukturen des Haftklebers erfolgt. Das wird durch Auftrag eines Vernetzers auf die Seitenkante mit nachträglicher UV- oder IR-Bestrahlung, Elektronenbestrahlung, Gammabestrahlung oder Plasmabehandlung erzielt. Als Vernetzer werden unter anderem Epoxide, Amine, Isocyanate, Peroxide oder polyfunktionelle Silane offenbart. Nachteilig ist der relativ umständliche und aufwändige Aufbau des Verfahrens.

In der EP 1 373 423 ist ein Verfahren zum Deaktivieren der Klebeschicht der Kantenfläche einer Klebebandrolle beschrieben, bei dem strahlenchemisch vernetzbare Acrylate, Acrylatoligomere und Acrylatprepolymere aufgetragen werden und mit ionisierender und elektromagnetischer Strahlung ausgehärtet werden.

In der US 2010 / 004 47 530 ist ein Verfahren zur Beschichtung der Seitenkanten einer Klebebandrolle beschrieben, bei dem ein indirektes Auftragsverfahren verwendet wird, bei dem strahlenhärtbare Lacke oder heißschmelzende Polymere zum Einsatz kommen.

In der EP 11 29 791 A2 ist ein Verfahren zur Herstellung von antiadhäsiven Beschichtungen beschrieben, bei denen die antiadhäsive Schicht mittels Niederdruckplasmapolymerisation auf das bahnförmige Material aufgebracht wird, indem das bahnförmige Material kontinuierlich durch eine Plasmazone gezogen geführt wird, in der ein Niederdruckplasma vorhanden ist. Die mittels Plasmapolymerisation geformten antiadhäsiven Beschichtungen sind insbesondere für Klebebandrückseiten und Trennmaterialien hergestellt.

Die oben genannten Verfahren eignen sich nur bedingt zur Reduzierung der Haftklebrigkeit des Wickelspiegels einer Klebebandrolle.

Es ist daher Aufgabe der Erfindung, ein verbessertes Verfahren zur Verfügung zu stellen, das die Haftklebrigkeit des Wickelspiegels einer Klebebandrolle reduziert.

Die Aufgabe wird durch ein eingangs genanntes Verfahren mit den Merkmalen des Anspruchs 1 gelöst.

Das Verfahren macht von der Verwendung eines Plasmajets Gebrauch, indem einem in dem Plasmajet erzeugten Plasmastrom ein Precursor zugeführt wird und mit dem mit dem Precursor angereicherten Plasma eine Trägerfolie mit einer Passivierungsschicht in einem Plasmaverfahren beschichtet wird. Ein Trägerfolienabschnitt wird mit einer passivierungsbeschichteten Seite auf einen Wickelspiegel der Klebebandrolle aufgelegt, der Trägerfolienabschnitt wird abgezogen und zumindest ein Teil der Passivierungsschicht verbleibt auf dem Wickelspiegel und verringert dessen Wickelspiegelklebrigkeit. Die genannten Verfahrensschritte werden vorzugsweise in der aufgeführten Reihenfolge ausgeführt.

Der Trägerfolienabschnitt wird von der Trägerfolie abgeschnitten, nachdem sie plasmabeschichtet wurde. Somit kann produktionstechnisch einfach eine Vielzahl an passgenauen passivierungsbeschichteten Trägerfolienabschnitten hergestellt werden.

Das erfindungsgemäße Verfahren macht von der Idee Gebrauch, die Haftklebrigkeit des Wickelspiegels nicht direkt herabzusetzen, sondern zunächst eine Trägerfolie mit einer Passivierungsschicht zur Verfügung zu stellen, wobei die Passivierungsschicht in einem Plasmaverfahren erzeugt wurde. In dem Plasmaverfahren können günstigerweise besonders dünne und homogene Passivierungsschichten mit hoher Reproduzierbarkeit hergestellt werden. Je nach Wahl der Materialien der Trägerfolie und des Precursors sind die Passivierungsschichten unterschiedlich leicht von der Trägerfolie ablösbar. Erfindungsgemäß wird die Trägerfolie mit ihrer Passivierungsschicht auf den klebrigen Wickelspiegel aufgelegt, wobei zumindest ein Teil der Passivierungsschicht durch den am Wickelspiegel vorhandenen Haftklebstoff abgelöst wird und sich mit dem Haftklebstoff verbindet. Die Haftklebkraft zwischen dem Haftklebstoff und der Passivierungsschicht ist größer als die Haftklebkraft zwischen der Trägerfolie und der Passivierungsschicht, sodass nach Ablösen des Trägerfolienabschnitts zumindest ein Teil der Passivierungsschicht auf dem Wickelspiegel verbleibt. Durch den von dem Trägerfolienabschnitt abgelösten Teil der Passivierungsschicht wird die Wickelspiegelklebrigkeit verringert.

In dem erfindungsgemäßen Verfahren wird der Precursor dem Plasma zugeführt, also nachdem das Prozessgas durch den Plasmajet zu einem Plasma angeregt wurde. Erst der Plasmastrom wird mit dem Precursor angereichert und dann auf eine Oberfläche der Trägerfolie gerichtet.

Dadurch wird der Precursor nicht dem starken elektromagnetischen Wechselfeld einer Elektrodenspitze des Plasmajets sowie der bei lichtbogenähnlichen Entladungen typisch entstehenden Wärme oder einem sonstigen Anregungsfeld des Plasmajets ausgesetzt, das die Monomere des Precursors möglicherweise zerstören könnte. Zudem wird die Verschmutzung der Elektroden dadurch verhindert.

Es gibt verschiedene Möglichkeiten, den Precursor dem Plasma zuzuführen.

Vorzugsweise wird ein flüssiger Precursor in einer Precursoreinheit verdampft und dann einem Trägergas zugeführt; das mit dem Precursor angereicherte Trägergas wird anschließend dem Plasmastrom zugeführt.

Günstigerweise kann der Precursor dem Plasmastrom auch als Aerosol zugeführt werden.

Vorzugsweise werden Siloxane oder siloxanhaltige Verbindungen als Precursor verwendet, insbesondere wird HMDSO (Hexamethyldisiloxan) als Precursor gewählt. Die Trägerfolie wird günstigerweise mit einer 10 nm bis 600 nm dicken Passivierungsschicht versehen. Durch das Plasmaverfahren ist somit gewährleistet, dass eine besonders dünne Passivierungsschicht erzeugt wird, die zum einen aufgrund ihrer dünnen Beschaffenheit die funktionalen Eigenschaften der Klebebandrollen nach ihrem Übertrag nicht verändert und zum anderen leicht von der Trägerfolie ablösbar ist und sich damit auf die klebrigen Wickellagen überträgt.

Vorzugsweise wird die Trägerfolie mit einer Laminierrolle oder einem ähnlichen Gerät auf den Wickelspiegel gedrückt. Dadurch entsteht eine stärkere Haftverbindung zwischen der Passivierungsschicht bzw. übertragenen Teilen der Passivierungsschicht und dem Wickelspiegel, sodass nach dem Abziehen der Trägerfolie vom Wickelspiegel zumindest ein Teil der Passivierungsschicht auf den klebrigen Bereichen des Wickelspiegels verbleibt und dessen Haftklebrigkeit herabsetzt. Günstigerweise wird die Passivierungsschicht nur an den und auf die haftklebenden Wickellagen übertragen.

Durch das erfindungsgemäße Verfahren wird die Passivierungsschicht nicht direkt auf dem Wickelspiegel erzeugt, sondern zunächst auf der Trägerfolie, wodurch das Verfahren robuster und effizienter gestaltet werden kann.

Vorzugsweise wird die Klebebandrolle durch Schneiden einer breiten Klebebandrolle hergestellt. Die Klebebandrolle wird von der breiten Klebebandrolle abgeschnitten. Das erfindungsgemäße Verfahren wird dann auf die abgeschnittene Klebebandrolle angewendet, wobei vorteilhafterweise das Schneiden der breiten Klebebandrolle und das Plasmabeschichten der Trägerfolie zeitsparend zeitgleich erfolgen kann. Vorzugsweise wird für die Trägerfolie ein Material aus der Gruppe PET, PVC, PC, PP oder PE gewählt. Diese Kunststoffe sind kostengünstig und leicht erhältlich.

Besonders bevorzugt wird ein unpolares Polymer als Material der Trägerfolie gewählt, weil unpolare Polymere, insbesondere mit siloxanhaltigen Passivierungsschichten nur eine schwache Verbindung ausbilden und somit die Passivierungsschicht leichter von der Trägerfolie lösbar ist.

Die Erfindung wird anhand eines Ausführungsbeispiels in vier Figuren beschrieben, dabei zeigen:
- Fig. 1: Plasmajet zum Aufbringen einer Passivierungsschicht auf eine Trägerfolie,
- Fig. 2: mit der Passivierungsschicht versehene Trägerfolie und Klebebandrolle mit klebrigem Wickelspiegel,
- Fig. 3: auf den Wickelspiegel aufgedrückte Trägerfolie gemäß Fig. 1,
- Fig. 4: vom Wickelspiegel der Klebebandrolle wieder abgezogene Trägerfolie.

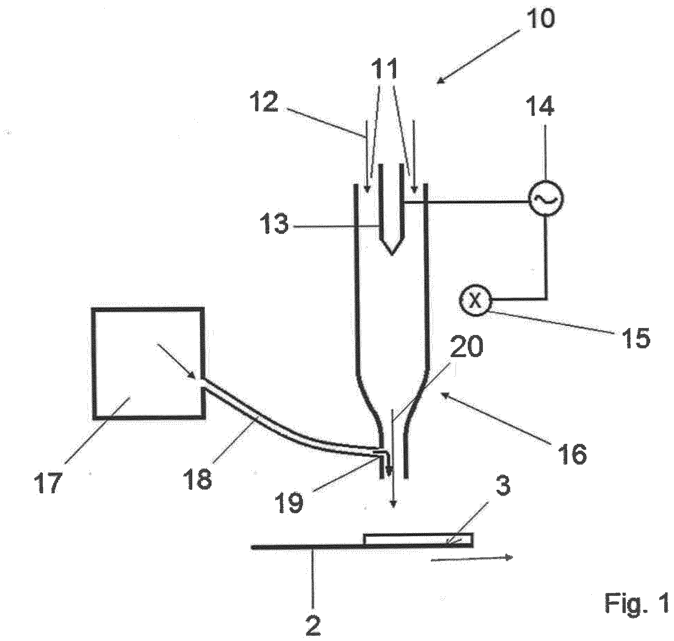

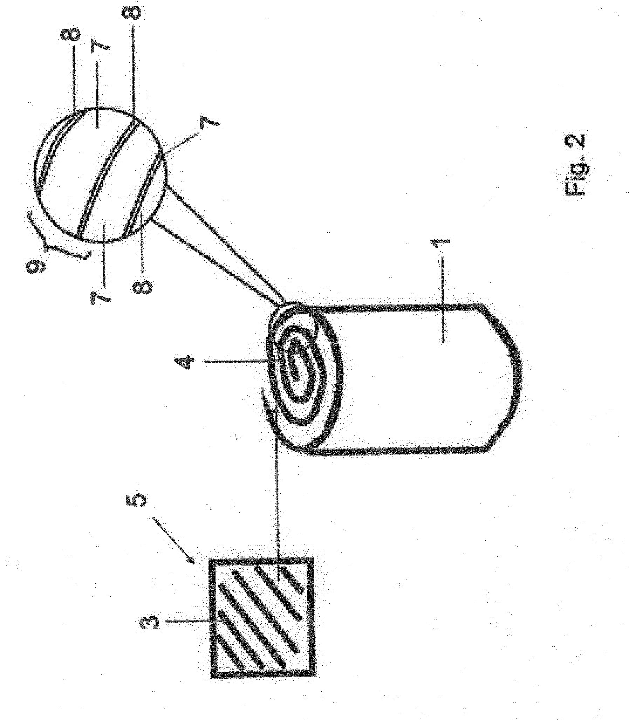

Das erfindungsgemäße Verfahren zur Reduzierung einer Wickelspiegelklebrigkeit einer Klebebandrolle 1 beruht darauf, zunächst eine Trägerfolie 2 mit einer Passivierungsschicht 3 mittels eines in Fig. 1 dargestellten Plasmajets 10 zu fertigen. Danach wird die mit der Passivierungsschicht 3 versehene Trägerfolie 2 in Trägerfolienabschnitte 5 geschnitten und mit der beschichteten Seite auf einen klebrigen Wickelspiegel 4 der Klebebandrolle 1 gemäß Fig. 2 aufgebracht.

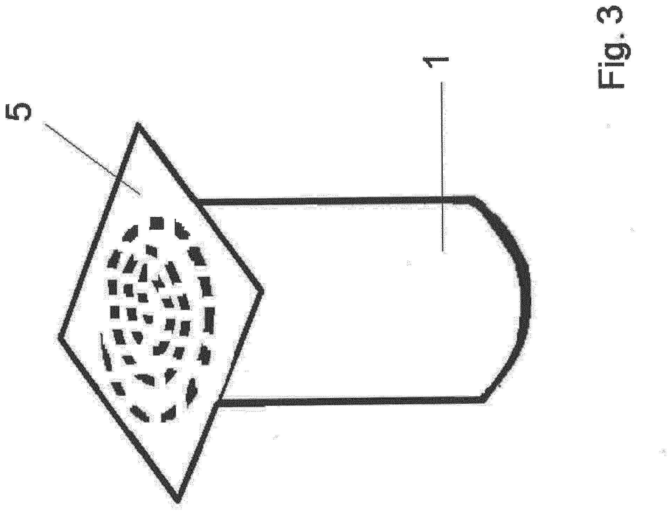

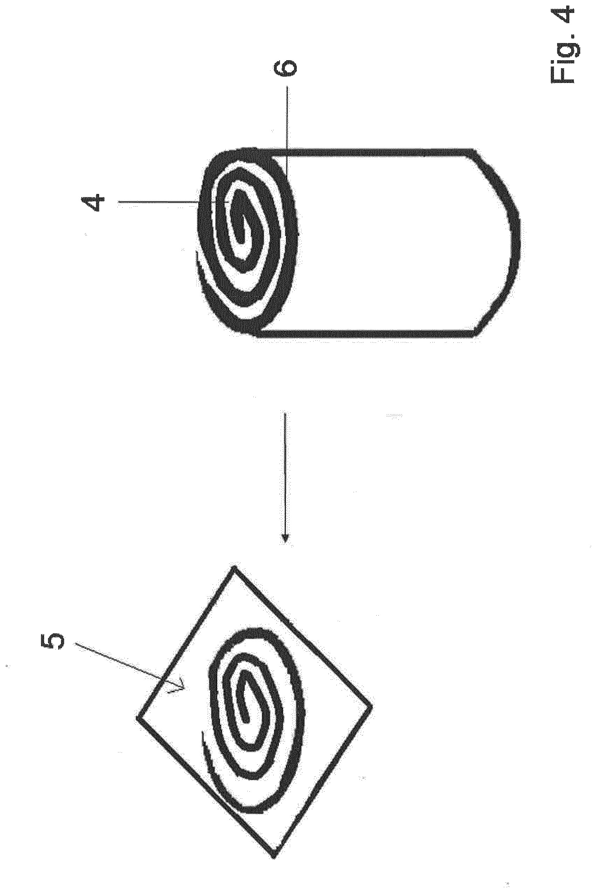

Gemäß Fig. 3 wird der Trägerfolienabschnitt 5 auf den Wickelspiegel 4 aufgedrückt. Dazu kann eine (nicht dargestellte) Laminierrolle verwendet werden. Dabei gerät die Passivierungsschicht 3 in engen Druckkontakt mit dem klebrigen Wickelspiegel 4. Durch das Aufdrücken und den Kontakt der Passivierungsschicht 3 mit dem klebrigen Wickelspiegel 4 verbindet sich ein Teil der Passivierungsschicht 6 mit die Haftklebrigkeit des Wickelspiegels 4 verursachenden Rändern einer Haftklebstoffbahn 8, und nach dem Abziehen des Trägerfolienabschnitts 5 verbleibt der von dem Trägerfolienabschnitt 5 abgelöste Teil der Passivierungsschicht 6 auf dem Wickelspiegel 4 und setzt die Haftklebrigkeit des Wickelspiegels 4 in Fig. 4 herab.

Unter dem Wickelspiegel 4 werden hier die beiden Stirnseiten der aufgerollten Klebebandrolle 1 verstanden. Die Klebebandrolle 1 weist eine Substratbahn 7 und die auf einer Seite der Substratbahn 7 aufgebrachte Haftklebstoffbahn 8 auf. Die Substratbahn 7 kann eine Folie, ein Gewebe oder Papier sein.

Die in den Fig. 2 und 3 dargestellte Klebebandrolle 1 weist die Substratbahn 7 auf, die einseitig mit Haftklebstoff beschichtet ist. Der Haftklebstoff bildet die die Substratbahn 7 einseitig vollständig abdeckende Haftklebstoffbahn 8 aus. Substratbahn 7 und Haftklebstoffbahn 8 bilden ein Klebeband 9 aus. Die Substratbahn 7 wird üblicherweise in Breiten von 500 mm - 2.000 mm gefertigt und zur Verfügung gestellt und auch in dieser Breite mit dem Haftklebstoff beschichtet. Die Substratbahn 7 wird mit der Haftklebstoffbahn 8 aufgewickelt, sodass die Klebebandrolle 1 ebenfalls eine Breite von 500 mm - 2.000 mm aufweist. Erst danach wird die sehr breite Klebebandrolle auf Klebebandrollen 1 der gewünschten Arbeitsbreite geschnitten. Nach dem Schneidvorgang liegt der Haftklebstoff der Schnittkanten der Klebebandrollen 1, insbesondere der Haftklebstoffbahnen 8 offen und kann durch seine adhäsiven Eigenschaften die Weiterverarbeitung sowie den Produkteinsatz erschweren oder sogar unmöglich machen.

Die in Fig. 2 gezeigte im Wesentlichen kreisrunde Stirnseite der Klebebandrolle 1 wird hier als Wickelspiegel 4 bezeichnet, der sich durch eine alternierende Abfolge von Substratbahn 7 und Haftklebstoffbahn 8 auszeichnet.

In anderen Ausführungsformen der Klebebandrolle 1 weist das Klebeband 9 ein sehr keines Verhältnis einer Dicke der Substratbahn 7 zu einer Dicke der Haftklebstoffbahn 8 auf. Bei solchen Klebebändern 9, die als Dickschichtprodukte bezeichnet werden, werden häufig viskoelastische Materialien für die Substratbahnen 7 mit eigenen adhäsiven Eigenschaften eingesetzt, sodass der gesamte Wickelspiegel 4 der Klebebandrolle 1 klebend ist.

Die Haftklebrigkeit des Wickelspiegels 4 führt dazu, dass nach Kontakt mit anderen Gegenständen die Klebebandrolle 1 beim Entfernen zerstört oder deformiert wird und sie für eine Verwendung nicht mehr einsetzbar ist. Dies ist insbesondere ein Problem bei Schmalrollen, die eine nur geringe mechanische Festigkeit aufweisen.

Die Haftklebrigkeit des Wickelspiegels 4 wird durch Aufbringen eines Teils der Passivierungsschicht 6 verringert. Dazu wird in einem ersten Verfahrensschritt gemäß Fig. 1 eine Trägerfolie 2 mit einer Passivierungsschicht 3 in einem Plasmaverfahren mittels des Plasmajets 10 beschichtet. Der in Fig. 1 schematisch dargestellte Plasmajet 10 weist wenigstens einen Eingang 11 für ein Prozessgas 12 auf. Bei dem Prozessgas 12 handelt es sich um Luft oder Stickstoff oder ein Gemisch daraus, das an einer Elektrodenspitze 13 vorbeigeführt wird. Die Elektrodenspitze 13 ist an eine hochfrequente Wechselspannung 14 mit einigen kV und einer Frequenz von etwa 10 kHz angeschlossen. Zwischen der Elektrodenspitze 13 und einer Gegenelektrode 15 entsteht ein starkes elektrisches Wechselfeld, das zu einer sogenannten Corona-Entladung führt, die das durch den Plasmajet 10 an der Elektrodenspitze 13 vorbeiströmende Prozessgas 12 ionisiert und in einen Plasmastrom 20 umwandelt. Der Plasmastrom 20 wird durch eine Plasmadüse 16 geführt, an die eine Precursoreinheit 17 über eine Precursordüse 19 angeschlossen ist. Aus der Precursoreinheit 17 wird dem Plasmastrom 20 ein verdampfter Precursor 18 zugeführt. Im vorliegenden Beispiel handelt es sich bei dem Precursor 18 um Hexamethyldisiloxan (HMDSO), das dem Prozessgas 12 in einer Größenordnung von 40 g/Stunde zugeführt wird. Die Precursordüse 19 steht in einem senkrechten Winkel zur Oberfläche der Trägerfolie 2 und mündet in die Plasmadüse 16, wobei die Trägerfolie 2 auf einem (nicht dargestellten) rotierenden Tisch aufliegt.

Die Behandlung einer Oberfläche der Trägerfolie 2 findet bei oder nahe bei Atmosphärendruck statt, wobei jedoch der Druck im elektrischen Entladungsraum des Plasmajets 10 oder im Prozessgaskanal erhöht sein kann. Unter einem Plasma wird hier ein Atmosphärendruckplasma verstanden, das ein elektrisch aktiviertes homogenes reaktives Gas ist, das sich nicht im thermischen Equilibrium befindet, mit einem Druck nahe dem Umgebungsdruck in einem Wirkbereich. Im Allgemeinen beträgt der Druck 0,5 bar mehr als der Umgebungsdruck. Durch die elektrischen Entladungen und durch die lonisierungsprozesse im elektrischen Feld wird das Prozessgas aktiviert, und es werden hochangeregte Zustände in den Gasbestandteilen erzeugt. Das verwendete Gas oder die Gasmischung werden als Prozessgas 12 bezeichnet. Dem Prozessgas 12 wird dann in der Plasmadüse 16, die über einen gasleitenden Kanal mit der Precursoreinheit 17 verbunden ist, der Precursor 18 in Gasform oder als Aerosol zugeführt, der die eigentliche Passivierungsbeschichtung 3 auf der Oberfläche der Trägerfolie 3 ausbildet.

### Beispiel 1:

In diesem Beispiel wird dem Prozessgas Hexamethyldisiloxan zugeführt, das im Prozessgas angeregt wird und seine Reaktivität dabei signifikant erhöht. Dadurch lagert sich das Siloxan an der Oberfläche der Trägerfolie 2 optimal an und bindet fest an. In diesem Beispiel wird eine Plasmapolymerisationsschicht erzeugt unter Verwendung der PlasmaPlus-Plasmatechnologie der Firma *Plasmatreat GmbH.*

Der Versuchsaufbau umfasst folgende Parameter, Bedingungen und technische Daten:

| | |
|---|---|
| Trägerfolie 1: | silikonisiertes BOPP |
| Plasmajet 10: | Generator FG 5001 der Firma *Plasmatreat* GmbH, feste Düse 216028WE |
| Precursor 18: | Hexamethyldisiloxan (HMDSO); |
| Precursormenge: | 40 g/Stunde |
| Anzahl der Behandlungen: | 1 - 3fach |
| Behandlungsgeschwindigkeit: | 80 U/min für Rotationstisch mit der Trägerfolie 2, das entspricht einer Auftragsgeschwindigkeit von 5 m/min der Plasmadüse 16 |
| Abstand der Plasmadüse 16 | |
| von der Trägerfolie 2 : | 15 mm |
| PCT (Pulse-Cycle-Time): | 100 % |

Dabei steht BOPP für biaxial orientierte Polypropylene. Unter PCT (Pulse-Cycle-Time) wird verstanden, dass die Plasmaentladung durch Pulsung moduliert wird. Das Ein- und Ausschalten kann die Standzeiten der Elektroden verbessern und die Bildung der reaktiven Spezies beeinflussen. In diesem Fall wird mit kontinuierlicher Entladung gearbeitet.

Nach der Plasmabeschichtung der Trägerfolie 2 wird der abgetrennte Trägerfolienabschnitt 5 auf den Wickelspiegel 4 der Klebebandrolle 1 mit einer 4 kg Rolle laminiert und sofort abgezogen. Auf dem abgezogenen Trägerfolienabschnitt 5 ist durch Lichtbrechung das Komplement des übertragenen Teils der Passivierungsschicht 6 erkennbar. Im vorliegenden Beispiel wurde bei dem Produkt *ACXplus 7055* der Firma *tesa* eine deutlich reduzierte Klebkraft auf dem Wickelspiegel 4 festgestellt. Die behandelten Klebebandrollen 1 haften mit dem Wickelspiegel 4 nicht mehr auf glatten bzw. metallischen Untergründen und können ohne Deformation wieder aufgenommen werden.

### Beispiel 2

In einem zweiten Beispiel wird das indirekte Plasmaverfahren *PlasmaLine*® der Firma *VITO*, Belgien eingesetzt. Diese Plasmabehandlung wurde für die Veredelung von Kunststoffoberflächen auf Basis der Corona-Technologie unter atmosphärischen Bedingungen entwickelt. Dabei handelt es sich um ein DBD (dielectric barrier discharge) System. Ein Aufbau der Plasmadüse ist in "Atmospheric DBD plasma processes for production of lightweight composites" (Vangeneugden et al., 2013, 21st International Symposium on Plasma Chemistry (ISPC 21), Sunday 4 August - Friday 9 August 2013, Cairns Convention Centre, Queensland, Australia) dargestellt.

Über eine Schlitzdüse wird ein lineares atmosphärisches Plasma über das Prozessgas 12 auf die zu behandelnde Trägerfolie 2 ausgeblasen, ohne dass eine Gegenelektrode 15 benötigt wird. Das Einbringen reaktiver Chemikalien in den Prozessgasstrom erzeugt eine dünne funktionale Passivierungsschicht 3, ohne die Eigenschaften des Basismaterials der Trägerfolie 2 zu verändern. Der Plasmastrom 20 bei APTES wird dabei durch seine Strömungsgeschwindigkeit von der Elektrodenspitze 13 fortgetrieben und nach kurzer Strecke auf die Trägerfolie 2 geleitet. Bei diesem Verfahren wurde silikonisiertes BOPP als Trägerfolie 2 beschichtet, und es wurden dabei folgende Parameter eingestellt:

### Abstand der Düse zum

| | |
|---|---|
| behandelnden BOPP: | 3,5 mm |
| Geschwindigkeit: | 5m/min |
| Leistung: | 2500W |
| Prozessgasstrom: | 900 sl/min |
| Aerosolart: | APTES |
| Behandlungsanzahl: | 5-mal |

Bei APTES handelt es sich um 3-Aminopropyltriethoxysilane. Nach der Plasmabehandlung der Trägerfolie 2 wird der Trägerfolienabschnitt 5 auf den Wickelspiegel 4 der Klebebandrolle 1 mit einer 4 kg Rolle laminiert und sofort abgezogen. Auf dem abgezogenen Trägerfolienabschnitt 5 ist durch Lichtbrechung das Komplement des übertragenen Teils der Passivierungsschicht 6 - hier einer Plasmapolymerisationsschicht - erkennbar. Bei dem *tesa*® Produkt *ACXplus 7055* kann eine deutlich reduzierte Klebkraft des Wickelspiegels 4 festgestellt werden. Die behandelten Klebebandrollen 1 haften mit dem Wickelspiegel 4 nicht mehr auf glattem bzw. metallischem Untergrund und konnten ohne Deformation wieder aufgenommen werden.

Eine häufig verwendete Klasse von Monomeren als Precursor in Plasmaverfahren stellen Siloxane dar. Sie bestehen aus einem Skelett aus Silicium und Sauerstoffatomen mit mehreren Kohlenwasserstoffresten. In Abhängigkeit vom verwendeten Monomer- und Plasmaparametern können quarzähnliche Passivierungsschichten 3 mit einem variablen Kohlenwasserstoffanteil abgeschieden werden (SiOxCyHz).

Bevorzugt ist eine Abscheidung von reinen SiOx-Passivierungsschichten 3, die sich als glasartige dünne Schichten erzeugen lassen.

Zur Passivierungsschichtabscheidung sind folgende polyfunktionale Siloxane geeignet: HMDSO (Hexamethyldisiloxan); TEOS (Tetraethoxysilan); PDMS (Polydimethylsiloxan). Typischerweise kommt es bei der Passivierungsschichtabscheidung des häufig verwendeten HMDSO im Plasma zuerst zur Abspaltung von Wasserstoff und ganzen Methylgruppen, die in der Gegenwart von Sauerstoff zu Wasser, CO sowie CO₂ reagieren. Das Si-O-Si-Gerüst bleibt meist als Baustein für die quarzartige Polymerschicht als Passivierungsschicht 3 bestehen.

Als Trägerfolien 2 können grundsätzlich alle Polymerfolien genutzt werden, dazu zählen insbesondere Folien aus PET, PVC, PC, PP oder PE.

Jedoch ist die Verankerung der zu transferierenden Passivierungsschicht 3 auf unpolare Polymere deutlich geringer ausgeprägt, so dass der Übertrag der Passivierungsschicht 3 auf den Wickelspiegel 4 einfacher erfolgt. Zudem hat es sich als vorteilhaft herausgestellt, dass silikonisierte Trägerfolien 2 eine Übergabe deutlich verbessern und mit geringerem Kraftaufwand zu entfernen sind.

### Bezugszeichenliste

- 1: Klebebandrolle
- 2: Trägerfolie
- 3: Passivierungsschicht

- 4: Wickelspiegel
- 5: Trägerfolienabschnitt
- 6: abgelöster Teil der Passivierungsschicht

- 7: Substratbahn
- 8: Haftklebstoffbahn
- 9: Klebeband
- 10: Plasmajet

- 11: Eingang
- 12: Prozessgas

- 13: Elektrodenspitze
- 14: Wechselspannung
- 15: Gegenelektrode
- 16: Plasmadüse

- 17: Precursoreinheit
- 18: Precursor
- 19: Precursordüse
- 20: Plasmastrom

## Patentansprüche

1. Verfahren zur Reduzierung einer Wickelspiegelklebrigkeit einer Klebebandrolle (1), indem
einem Plasmastrom (20) ein Precursor (18) zugeführt wird,
mit dem mit dem Precursor (18) angereicherten Plasmastrom (20) eine Trägerfolie (2) mit einer Passivierungsschicht (3) in einem Plasmaverfahren beschichtet wird, ein Trägerfolienabschnitt (5) mit seiner passivierungsbeschichteten Seite auf einen Wickelspiegel (4) der Klebebandrolle (1) aufgelegt wird,
der Trägerfolienabschnitt (5) abgezogen wird und zumindest ein Teil der Passivierungsschicht (6) auf dem Wickelspiegel (4) verbleibt und dessen Wickelspiegelklebrigkeit verringert.

2. Verfahren nach Anspruch 1,
**dadurch gekennzeichnet, dass** einem Plasmastrom (20) an einer Plasmadüse (16) der Precursor (18) zugeführt wird und der mit dem Precursor (18) angereicherte Plasmastrom (20) auf eine Oberfläche der Trägerfolie (2) gerichtet wird.

3. Verfahren nach Anspruch 1 oder 2,
**dadurch gekennzeichnet, dass** ein flüssiger Precursor (18) verdampft wird und dann einem Trägergas zugeführt wird.

4. Verfahren nach einem der Ansprüche 1 bis 3,
**dadurch gekennzeichnet, dass** Siloxane als Precursor (18) verwendet werden.

5. Verfahren nach Anspruch 4,
**dadurch gekennzeichnet, dass** HMDSO als Precursor (18) verwendet wird.

6. Verfahren nach einem der vorstehenden Ansprüche,
**dadurch gekennzeichnet, dass** der Trägerfolienabschnitt (5) mit einer Laminierrolle auf den Wickelspiegel (4) gedrückt wird.

7. Verfahren nach einem der vorstehenden Ansprüche,
**dadurch gekennzeichnet, dass** die Trägerfolie (2) mit einer 10 nm bis 600 nm dicken Passivierungsschicht (3) versehen wird.

8. Verfahren nach einem der vorstehenden Ansprüche,
**dadurch gekennzeichnet, dass** für die Trägerfolie (2) ein Material aus der Gruppe PET, PVC, PC, PP PE gewählt wird.

## Claims

1. Method for reducing end face stickiness of a roll (1) of adhesive tape, by
supplying a precursor (18) to a plasma stream (20), using the plasma stream (20) enriched with the precursor (18) to coat a carrier film (2) with a passivation coat (3) in a plasma process, placing a carrier film section (5) by its passivation-coated side onto an end face (4) of the roll (1) of adhesive tape,
removing the carrier film section (5) and leaving at least part of the passivation coat (6) on the end face (4) and reducing its end face stickiness.

2. Method according to Claim 1,
**characterized in that** the precursor (18) is supplied to a plasma stream (20) at a plasma nozzle (16), and the plasma stream (20) enriched with the precursor (18) is directed at a surface of the carrier film (2).

3. Method according to Claim 1 or 2,
**characterized in that** a liquid precursor (18) is vaporized and then supplied to a carrier gas.

4. Method according to any of Claims 1 to 3, **characterized in that** siloxanes are used as precursor (18).

5. Method according to Claim 4,
**characterized in that** HMDSO is used as precursor (18) .

6. Method according to any of the preceding claims, **characterized in that** the carrier film section (5) is pressed with a laminating roller onto the end face (4) .

7. Method according to any of the preceding claims, **characterized in that** the carrier film (2) is provided with a passivation coat (3) 10 nm to 600 nm thick.

8. Method according to any of the preceding claims, **characterized in that** for the carrier film (2) a material from the group of PET, PVC, PC, PP, and PE is selected.

## Revendications

1. Procédé de réduction de l'adhésivité de la tranche d'un rouleau de ruban adhésif (1), selon lequel
un précurseur (18) est introduit dans un courant de plasma (20),
un film support (2) est revêtu avec une couche de passivation (3) par un procédé plasma avec le courant de plasma (20) enrichi avec le précurseur (18),
une partie du film support (5) est disposée avec son côté revêtu d'une couche de passivation sur une tranche (4) du rouleau de ruban adhésif (1),
la partie de film support (5) est retirée et au moins une partie de la couche de passivation (6) reste sur la tranche (4) et réduit l'adhésivité de la tranche.

2. Procédé selon la revendication 1,
**caractérisé en ce que** le précurseur (18) est introduit dans un courant de plasma (20) au niveau d'une buse à plasma (16), et le courant de plasma (20) enrichi avec le précurseur (18) est dirigé sur une surface du film support (2).

3. Procédé selon la revendication 1 ou 2,
**caractérisé en ce qu'**un précurseur liquide (18) est vaporisé, puis introduit dans un gaz support.

4. Procédé selon l'une quelconque des revendications 1 à 3,
**caractérisé en ce que** des siloxanes sont utilisés en tant que précurseur (18).

5. Procédé selon la revendication 4,
**caractérisé en ce que** de l'HMDSO est utilisé en tant que précurseur (18).

6. Procédé selon l'une quelconque des revendications précédentes,
**caractérisé en ce que** la partie de film support (5) est pressée avec un rouleau de laminage sur la tranche (4) .

7. Procédé selon l'une quelconque des revendications précédentes,
**caractérisé en ce que** le film support (2) est muni d'une couche de passivation (3) d'une épaisseur de 10 nm à 600 nm.

8. Procédé selon l'une quelconque des revendications précédentes,
**caractérisé en ce qu'**un matériau du groupe constitué par le PET, le PVC, le PC, le PP, le PE est choisi pour le film support (2).
